# EUROPEAN PATENT SPECIFICATION

(11) **EP 1 054 790 B1**
(45) Date of publication and mention of the grant of the patent: **29.10.2003**
(21) Application number: 99904061.1
(22) Date of filing: 08.01.1999
(51) Int. Cl.: B60R 21/16

(54) **SIDE CURTAIN AIRBAG SYSTEM**
SEITENAIRBAG VORRICHTUNG
COUSSIN GONFLABLE FORMANT RIDEAU LATERAL

(30) Priority: 20.02.1998 US 26571
(43) Date of publication of application: 29.11.2000
(73) Proprietor: Breed Automotive Technology, Inc., Lakeland, FL 33807-3050 (US)
(72) Inventor: BAILEY, Brian, J., Romeo, Michigan 48065-4487 (US); TOBIAN, Robert, New Baltimore, MI 48047 (US); JOST, Stefan, D-65817 Eppstein (DE); WONG, Samuel, Troy, MI 48098 (US); WIPASURAMONTON, Pongdet, P., Rochester, MI 48307 (US); REUTER, Jorg, D-65527 Niedernhausen (DE)
(74) Representative: Rutetzki, Andreas, Dipl.-Ing.
(86) International application number: PCT/US99/00508
(87) International publication number: WO 99/042333

(56) References cited:
- EP-A- 0 814 001
- GB-A- 2 314 300
- GB-A- 2 319 751
- GB-A- 2 326 385

## Description

### BACKGROUND AND SUMMARY OF THE INVENTION

The present invention relates to a side curtain airbag as defined in the precharacterizing portion of claim 1 designed to provide protection to vehicle occupants during a side impact crash or rollover event. More particularly, the side curtain airbag module is mounted proximate the vehicle roof rail and concealed by the headliner trim. Upon impact, the side curtain airbag is deployed between the vehicle occupants and intruding object to protect the outboard front and rear occupants.

From EP-A-814 001 a side airbag according to the precharacterizing portion of claim 1 is known.

From GB-A-2 314 300 a side airbag is known, wherein the tube is made of a wall of double fabric thickness of the side airbag itself, thus re-enforcing the flow passage of a conduit for gases of a gas generator.

It is an object of the present invention to provide an airbag or inflatable curtain to protect one or more vehicle occupants in a side impact or roll over crash event.

This object is achieved by the invention as in claim 1. Further developments of the invention are disclosed in dependent claims 2-9.

### BRIEF DESCRIPTION OF THE DRAWINGS

FIG. 1a illustrates the major components of the present invention.
FIG. 1b shows a cross-sectional view taken through a portion of the airbag of FIG. 1.
FIG. 2 is a left-hand plan view of the interior of a passenger compartment showing the major components of the present invention.
FIG. 3 illustrates a cross-sectional view showing the interconnection of an airbag/cushion in relation to a roof rail.
FIG. 4 is an isometric view of an axial flow airbag inflator.
FIG. 5 illustrates the interconnection of the inflator with other components of the invention.
FIG. 6 shows a side curtain or airbag in its deployed state protecting occupants within the passenger compartment.
FIGS. 7 and 8 illustrate alternate embodiment of the invention.
FIG. 9 shows an alternate installation of the present invention.

### DETAILED DESCRIPTION OF THE INVENTION

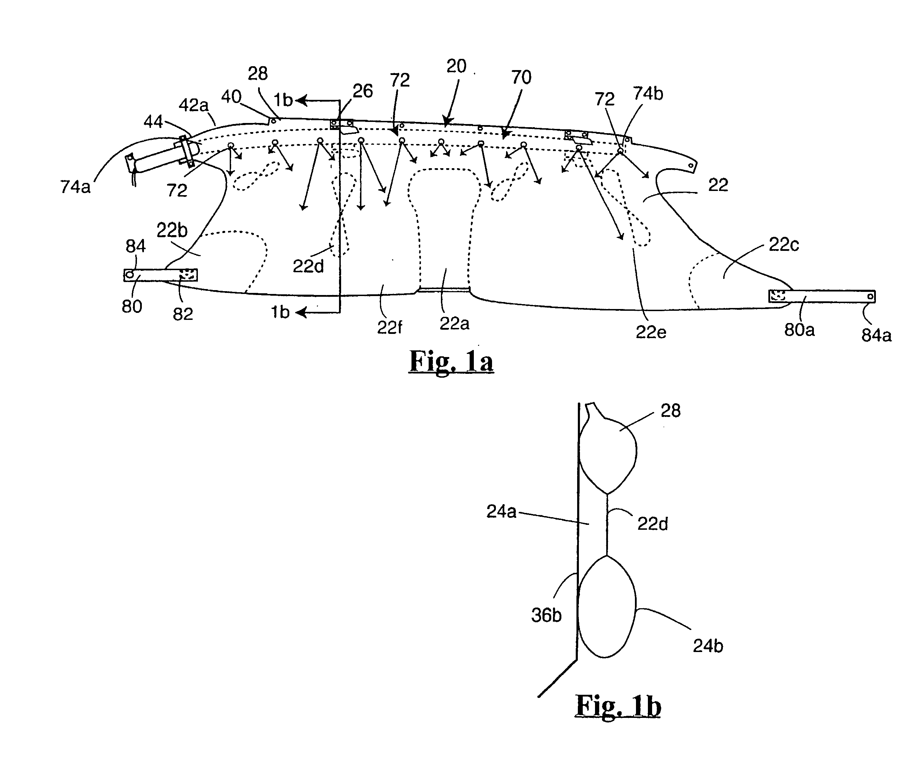

Reference is now made to Figs. 1a, 2 and 6. FIG. 1a illustrates a side curtain airbag module generally shown as 20. As used herein and in the claims, terms such as "top", "bottom", "upper", "lower", "front" and "rear" are understood to refer to locations viewed from the interior of a vehicle in which a side curtain airbag module is installed.

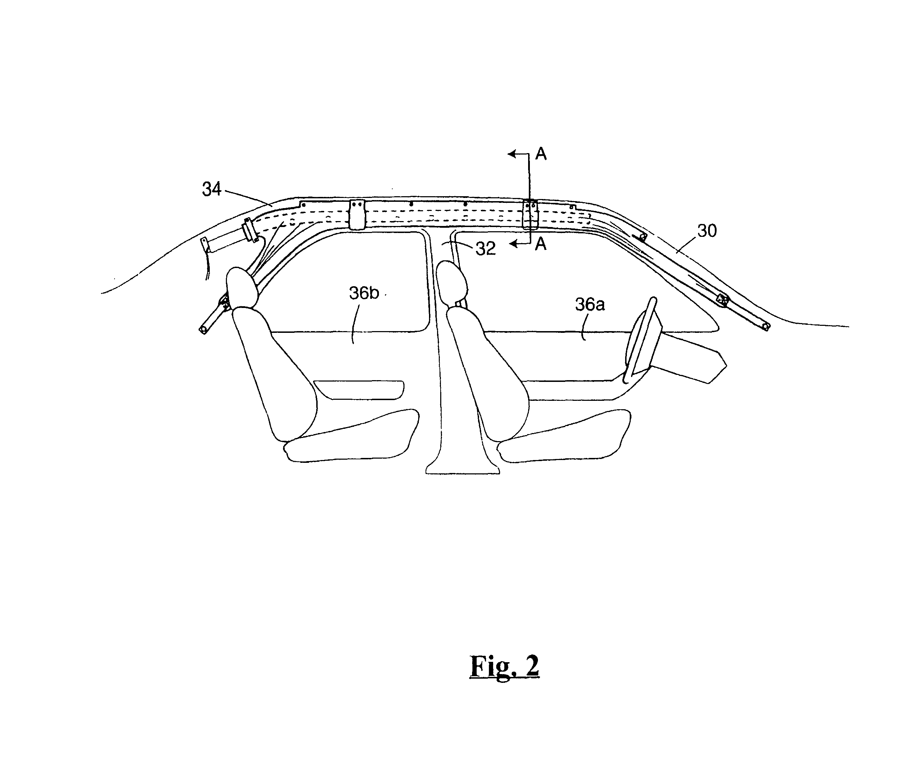

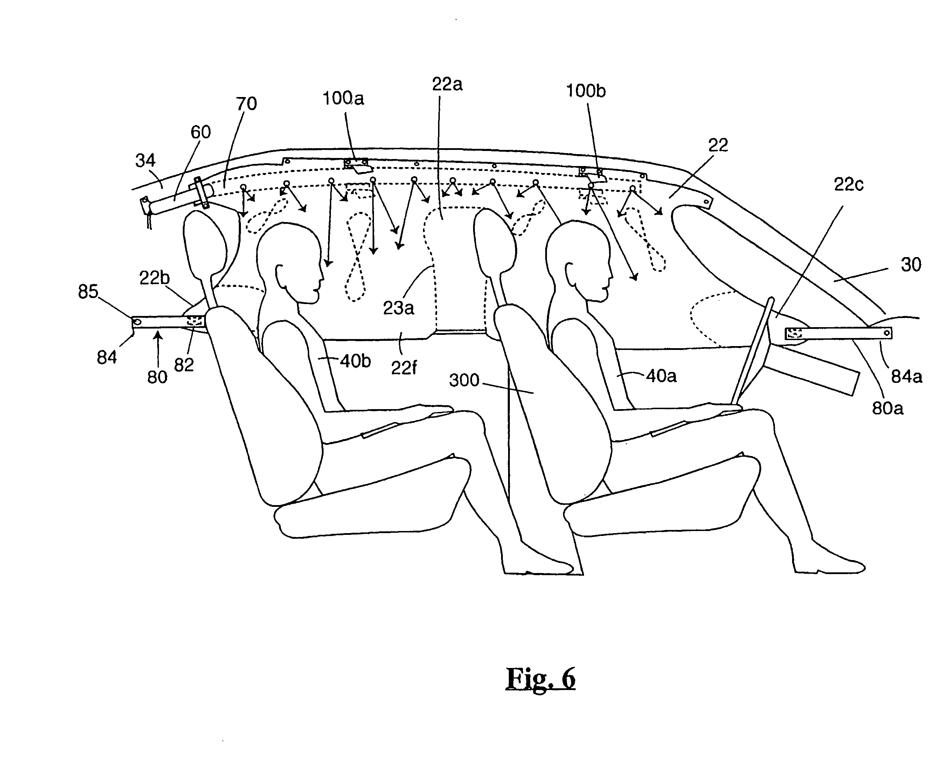

As best shown in FIG. 2, the side curtain airbag module 20 comprises an airbag 22 of sufficient length to extend generally from the vehicle's A-pillar 30 across the B-pillar 32 to the C-pillar 34. As illustrated in FIGs. 2and 6, when inflated the airbag is of sufficient height to extend from proximate a roof rail (38) of the vehicle to at least the lower edge of a side window of the vehicle. Put another way, the airbag 22 is of sufficient height such that when deployed the airbag 22 will be located between the side panels 36a and 36b of the vehicle and the upper torso of the outboard seated occupant, generally shown as 40a and 40b in FIG. 6).

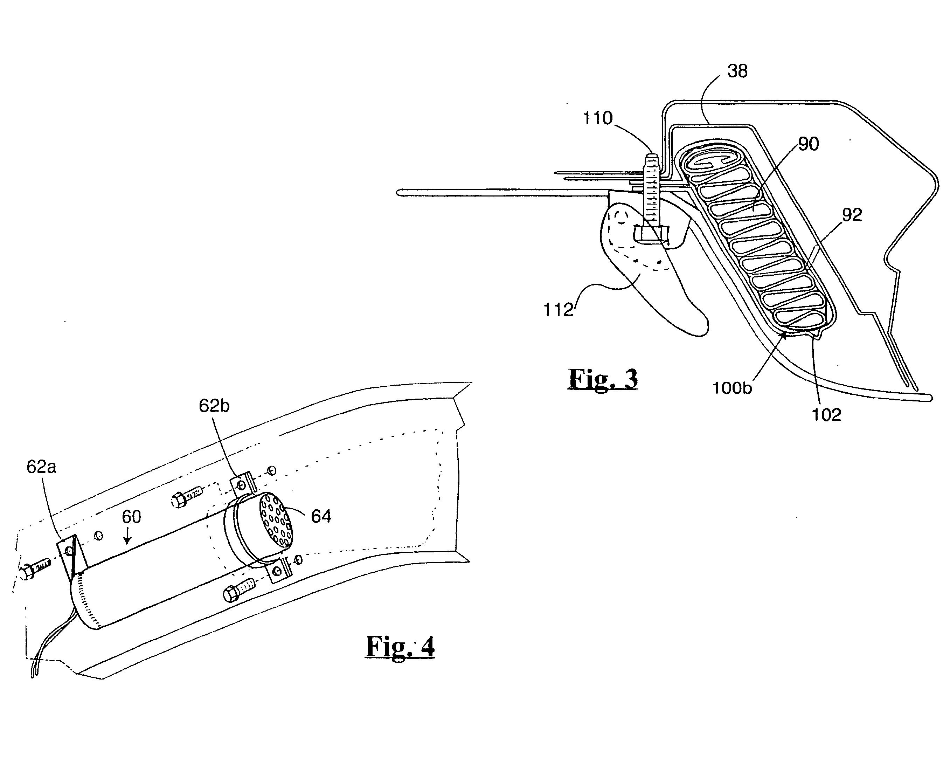

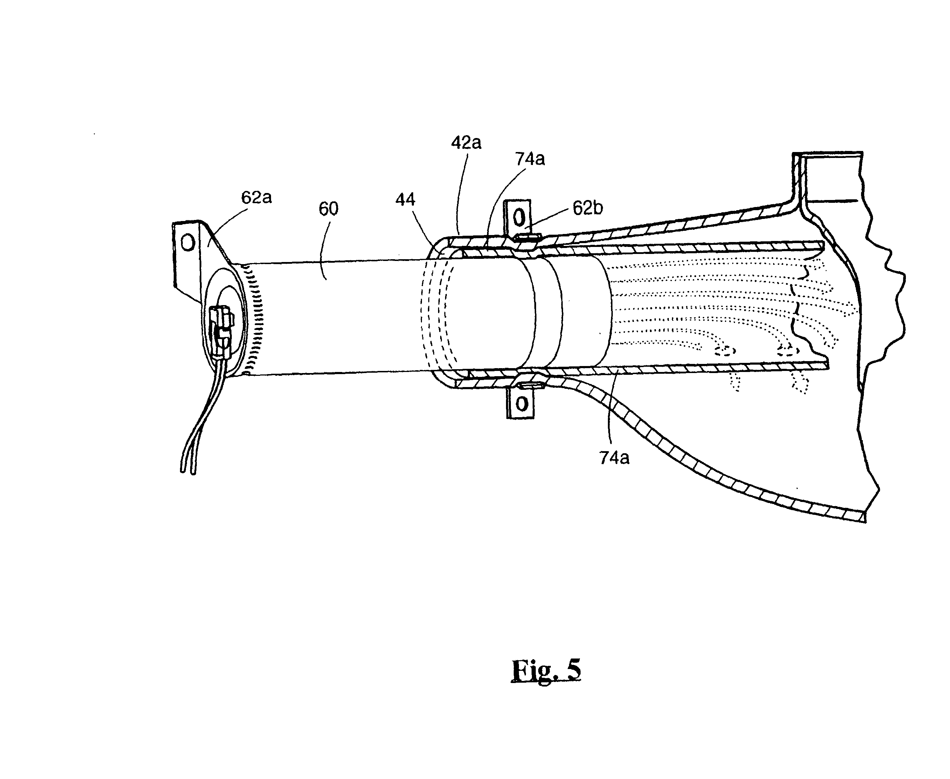

The airbag 22 comprises a plurality of sewn panels 24a, 24b of woven airbag fabric or panels of thermoplastic material that are welded or bonded together. With regard to the fabric, airbag material permeability is chosen to match the required time that the airbag should be inflated. The top 26 of the airbag 22, proximate a seam 28 of the sewn panels 24a, 24b includes a plurality of openings 40. A plurality of fasteners, (not shown), are used to secure the top 26 of the airbag 22 to the reinforced roof rail 38 (see FIG. 3). As best seen in FIG. 1a, one end of the airbag, such as the left, rear end 42a of airbag 22, includes an opening 44. Inserted within this opening 44 is an airbag inflator 60. In the embodiment shown, the inflator 60 includes a plurality of mounting brackets or flanges 62a and 62b to permit the inflator 60 to be mounted to an adjacent structural component such as the C-pillar of the vehicle. The inflator 60 may be a solid propellant, hybrid, augmented or liquid inflator of known variety, which upon activation produces, or supplies, pressurized inflation gas to the airbag 22. In the embodiment illustrated, the inflator 60 includes a plurality of axially oriented output ports 64. Located within the top portion 26 of the airbag 22 is a flexible tube 70. In the preferred embodiment of the invention the tube 70 has an elastomeric inner tube with a reinforced outer sheath made of a braided or woven fabric. Alternatively, the tube can be made of metal, plastic, rubber or nylon. The tube 70 includes a plurality of openings 72 located along its length. The tube 70 includes ends 74a and 74b. As can be seen in FIG. 5, one end 74a of the tube is secured about the inflator 60, which is a source of inflation gas, by a bracket 62b, to permit the inflation gasses to flow directly into the tube. The opposite end 74b of the tube is closed or bonded shut. It should be appreciated that the inflator 60 can be mounted to an end 74b of the tube which would require that end 74a be similarly closed. In addition, as can be appreciated, upon activation of the inflator 60 inflation gasses will be propelled through the tube 70. Because of the length of the tube 70 the pressure distribution of the inflation gasses will diminish in relation to the distance from inflator 60. Consequently, the openings 72 in the tube 70 may be non-uniformly distributed along the length of the tube such the entire volume of the airbag 22 is inflated substantially simultaneously. As can be seen in FIG. 1a, the distribution of the openings 72 in the tube is biased toward the closed end 74b of the tube 70, that is the side of the airbag 22 farthest from the inflator 60.

As mentioned above, the airbag 22 comprises a plurality of joined panels 24a, 24b. The center 22a of the airbag, which is located near the seat back 300 of a front seat of the vehicle or alternatively near the B-pillar 32, is bonded or sewn shut so that it will not be inflated. The bonding or seam line is shown as 23a in FIG. 6. As can be appreciated, if the airbag 22 were inflated in this location 22a, it would not provide any measurable degree of occupant protection. The lower rear region 22b of the airbag 22 is similarly bonded or sewn together such that it does not inflate. In addition, this area may be reinforced to enable the connection of a tether 80 thereto. One end 82 of the tether is bonded or sewn to the lower rear region 22b of the airbag while another end 84 of tether 80 is loosely or pivotably secured to a structural portion of the vehicle by a fastener which is received through an opening 85 in the tether. Similarly, a lower forward region 22c of the airbag 22 is closed so that it does not inflate and a second tether 80a is secured thereto.
Similarly, an end 84a of tether 80a is secured proximate a lower portion of the A-pillar 30 to permit it to rotate downwardly upon deployment of the airbag. Various other regions of the airbag, such as indicated at 22d and 22e in FIG. 1a, are sewn or bonded closed so that they do not inflate and channel the inflation gas to specific inflated regions, lobes or portions of the airbag 22.

Beginning at a lower edge 22f of the airbag is folded into an accordion pleat configuration 90 to achieve the configuration generally shown in FIG. 3. In this folded configuration the airbag 22 will essentially be formed into a long, tubular-like configuration. To keep the airbag in this folded configuration, the airbag is enveloped in a breakable, or tearable, material such as shrink-wrap material (cellophane) 92 of a known variety. The folded, enveloped airbag 22 is then secured to the roof rail 38 using a plurality of fasteners, such as retainer clips 100a, 100b. As illustrated in FIG. 3, one of the retainer clips 100b includes a pre-stressed tear region 102 to permit each clip to tear open (as illustrated in FIG. 6) upon inflation of the airbag. The retainer clips 100a and 100b can be secured by fasteners 110 as illustrated in FIG. 3 to the roof rail.

As is known in the art, located above the front and rear doors of many vehicles are U-shaped grab handles that are utilized to assist the occupant in exiting the vehicle. One such grab handle 112 is illustrated in FIG. 3. The fastener 110 utilized co secure the grab handle to the roof rail can also be utilized to secure the clips 100a, 100b to the roof rail. As can be appreciated, the number of clips will depend on the individual vehicle. In addition, the folded, enveloped airbag can be placed in a tubular plastic shell having the pre-stressed section 102; in essence the pre-stressed shell can be envisioned as a plurality of contiguous retaining clips 100a,b, etc.

Reference is briefly made to FIG. 7 that illustrates an alternate embodiment of the invention. In this embodiment the inflator 60a is configured such that it comprises at least two exit ports 64a and 64b (opposite to one another). The inflator, using an adapter 150, is secured to opposing sections 70a, 70b of a segmented tube 70. The inflator 60a of FIG. 7 can be secured to the B-pillar 32 of the vehicle.

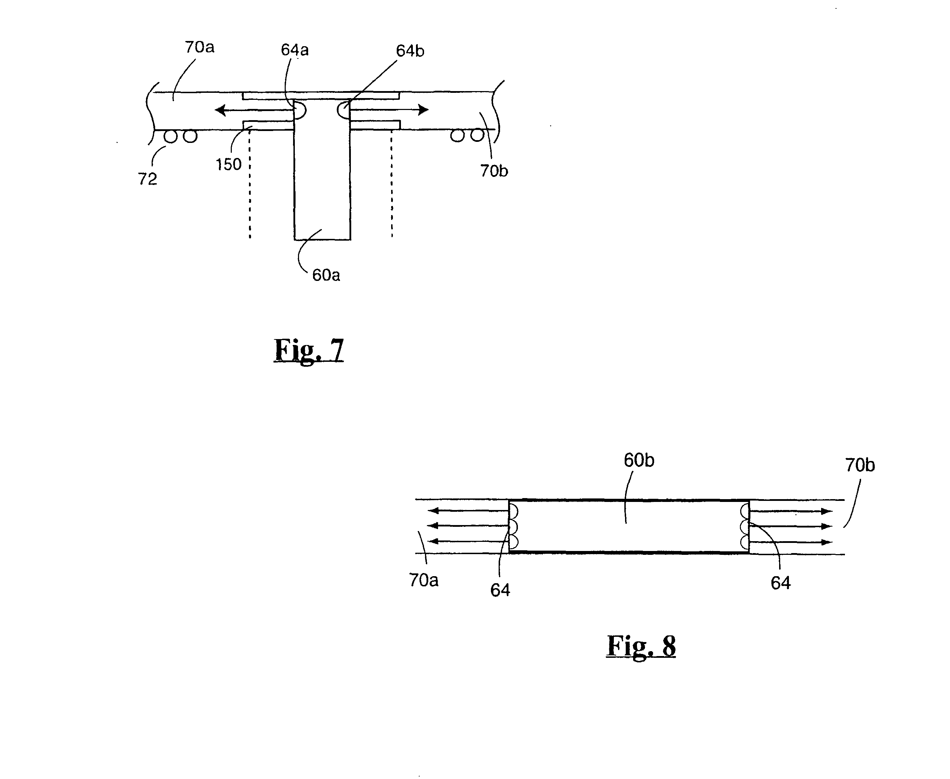

FIG. 8 illustrates another alternate embodiment of the invention. In this embodiment, the inflator 60b comprises axial flow ports 64 at both of its ends. The inflator is connected to opposing sections 70a, 70b of the segmented tube 70.

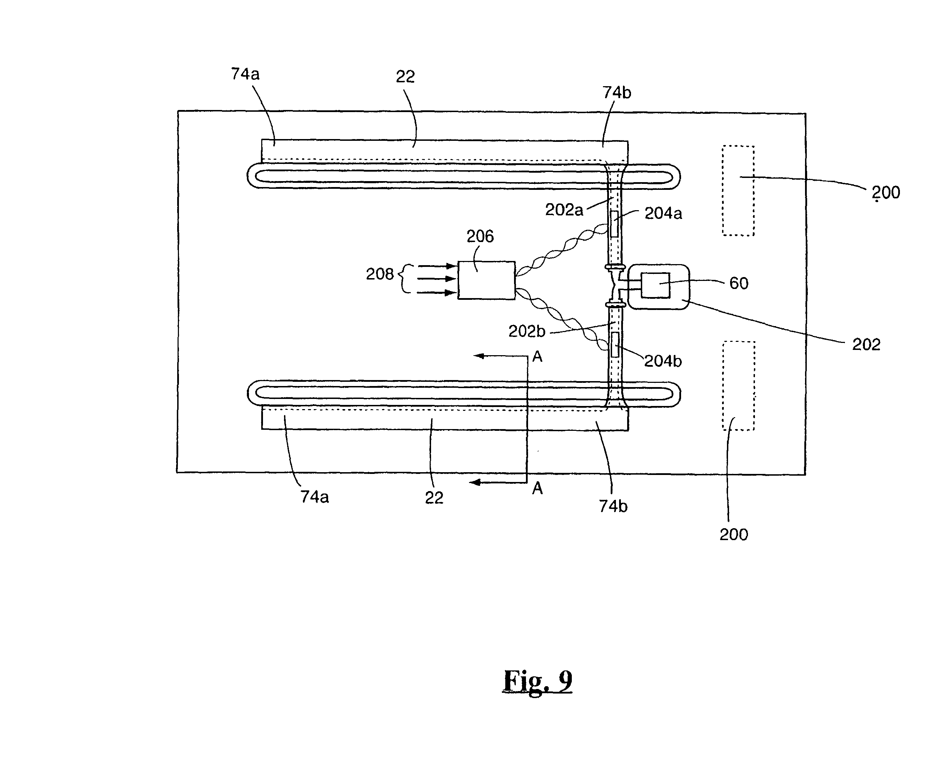

Reference is briefly made to FIG. 9 which illustrates a further embodiment of the invention. FIG. 9 shows a top plan view of a roof of a vehicle. The front windows 200 identify the forward portion of the vehicle. Many vehicles, such as vans and trucks, include a center console 202 located in front of and between the seating locations of the front occupants of the vehicle. Located generally in the area of this console is a central inflator 60 that is in communication, via tubes or conduits 202a, 202b, with a section proximate the closed end 74b of opposing situated cushions 22. The opposing end 74a of each of the cushions 22 is enclosed. Situated within each conduit 202a, 202 b is a control valve 204a, 204b that is responsive to signals received from a control unit 206. The control unit is responsive to input signals 208 received from a plurality of crash sensors (not shown) located in and about the vehicle. Upon sensing that the vehicle is involved in a crash on one or the other side of the vehicle, or that the vehicle is involved in a rollover, the controller 206 activates the inflator 60 and one of the corresponding control valves 204a, 204b to permit inflation gas to flow to one or the other of the airbags 22 on the right or left-hand side of the vehicle in the side impact and/or rollover crash event. Alternatively, and depending upon the capacity of the inflator 60 of FIG. 8, the control unit 206 may simultaneously activate both valves 204a, 204b which will then deploy the airbags 22 on both sides of the vehicle such that they achieve the deployed orientation illustrated in FIG. 6.

## Claims

1. A side curtain airbag system (20) comprising:
an airbag (22) being of sufficient length to extend from an A-pillar (30) of a vehicle to be secured proximate a C-pillar (34) of a vehicle, when inflated the airbag extends from proximate a roof rail (38) of the vehicle;
a source of inflation gas (60) communicating with a tube (70) for inflating the airbag (22);
the tube (70) being located in the airbag (22) and having a plurality of openings (72) along its length to distribute inflation gas to the airbag (22);
**characterized in that**
the airbag (22) comprises a plurality of joined panels (24a, 24b) and when inflated the airbag (22) is of sufficient height to extend from proximate the roof rail (38) of the vehicle to at least the lower edge of the side window of the vehicle; and
the tube (70) is flexible and has an elastomeric inner tube with a reinforced outer sheath made of a braided or woven fabric.

2. The side curtain airbag system (20) of claim 1 wherein the openings (72) in the flexible tube (70) are non-uniformly distributed along the length of the tube such the entire volume of the airbag is inflated substantially simultaneously.

3. The side curtain airbag system (20) of either of claims 1 or 2 wherein a lower rear region 22b of the airbag 22 is bonded or sewn together such that it does not inflate.

4. The side curtain airbag system (20) of any of the preceding claims wherein a lower front region 22b of the airbag 22 is bonded or sewn together such that it does not inflate.

5. The side curtain airbag system (20) of any of the preceding claims wherein various regions of the airbag (22d and 22e) are bonded or sewn together such that they do not inflate and thereby channel the inflation gas to specific inflated regions of the airbag.

6. The side curtain airbag system (20) of any of the preceding claims wherein beginning at a lower edge (22f) of the airbag the airbag is folded into an accordion pleat configuration (90) to essentially be formed into a long, tubular-like configuration and is enveloped in a breakable, or tearable, material.

7. The side curtain airbag system (20) of Claim 6 wherein the folded, enveloped airbag (22) is secured to the roof rail (38).

8. The side curtain airbag system (20) of any of the preceding claims wherein the tube (70) has one end (74a) that is secured about an inflator (60) that is the source of inflation gas to permit the inflation gas to flow directly into the tube, an opposite end (74b) of the tube being closed or bonded shut.

9. The side curtain airbag system (20) of any of Claims 1 through 7 wherein the tube has two ends which are closed or bonded shut and the source of inflation gas supplies inflation gas to the tube at a location intermittent of the two closed ends.

## Patentansprüche

1. Seitenairbag-Vorrichtung bzw. -System (20) umfassend:
einen Airbag (22), welcher eine ausreichende Länge aufweist, um sich von einer A-Säule (30) eines Fahrzeugs zu erstrecken, um nahe einer C-Säule (34) eines Fahrzeugs gesichert bzw. festgelegt zu werden, wenn sich der Airbag in aufgeblasenem Zustand von einer Position nahe einer Dachschiene (38) des Kraftfahrzeugs erstreckt;
eine Quelle an Aufblasgas (60), welche mit einem Rohr (70) zum Aufblasen des Airbags (22) in Verbindung steht;
wobei das Rohr (70) in dem Airbag (22) angeordnet ist und eine Vielzahl von Öffnungen (72) entlang seiner Länge aufweist, um das Aufblasgas an den Airbag (22) zu verteilen;
**dadurch gekennzeichnet, daß**
der Airbag (22) eine Vielzahl von verbundenen Stoffbahnen (24a, 24b) umfaßt und in aufgeblasenem Zustand der Airbag (22) von ausreichender Höhe ist, um sich von der Nähe bzw. nahe der Position der Dachschiene (38) des Kraftfahrzeugs wenigstens bis zu dem unteren Rand bzw. der unteren Kante des Seitenfensters des Kraftfahrzeugs zu erstrecken; und
das Rohr (70) flexibel ist und ein elastomeres Innenrohr mit einer verstärkten äußeren Hülle bzw. Ummantelung aufweist, welche aus einem geflochtenen oder gewebten Gewebe hergestellt ist.

2. Seiten-Airbagsystem (20) nach Anspruch 1, worin die Öffnungen (72) in dem flexiblen Rohr (70) nicht-einheitlich entlang der Länge des Rohr verteilt sind, so daß das gesamte Volumen des Airbags im wesentlichen gleichzeitig aufgeblasen wird.

3. Seiten-Airbagsystem (20) nach einem der Ansprüche 1 oder 2, worin ein unterer rückwärtiger Bereich 22b des Airbags 22 gemeinsam verbunden oder genäht ist, so daß er sich nicht aufbläst.

4. Seiten-Airbagsystem (20) nach einem der vorangehenden Ansprüche, worin ein unterer vorderer Abschnitt 22b des Airbags 22 gemeinsam verbunden oder genäht ist, so daß er sich nicht aufbläst.

5. Seiten-Airbagsystem (20) nach einem der vorangehenden Ansprüche, worin verschiedene Bereiche des Airbags (22d und 22e) miteinander verbunden oder genäht sind, so daß sie sich nicht aufblasen und dadurch das Aufblasgas zu bestimmten aufgeblasenen Bereichen bzw. Regionen des Airbags leiten bzw. kanalisieren.

6. Seiten-Airbagsystem (20) nach einem der vorangehenden Ansprüche, worin ausgehend von einem unteren Rand bzw. einer unteren Kante (22f) des Airbags der Airbag in eine Akkordeon-Faltungskonfiguration (90) gefaltet ist, um im wesentlichen in eine lange, rohrartige Konfiguration ausgebildet zu sein, und in einem brechbaren oder zerreißbaren Material umhüllt bzw. aufgenommen ist.

7. Seiten-Airbagsystem (20) nach Anspruch 6, worin der gefaltete umhüllte Airbag (22) an der Dachschiene (38) gesichert ist.

8. Seiten-Airbagsystem (20) nach einem der vorangehenden Ansprüche, worin das Rohr (70) ein Ende (74a) aufweist, welches um eine Aufblaseinrichtung (60) gesichert ist, welches die Quelle von Aufblasgas ist, um zu erlauben, daß das Aufblasgas direkt in das Rohr fließt bzw. strömt, wobei ein gegenüberliegendes Ende (74b) des Rohrs geschlossen oder abgeschlossen verbunden ist.

9. Seiten-Airbagsystem (20) nach einem der Ansprüche 1 bis 7, worin das Rohr zwei Enden aufweist, welche geschlossen oder abgeschlossen verbunden sind und die Quelle für Aufblasgas Aufblasgas zu dem Rohr an einer Stelle zwischen den zwei geschlossenen Enden zuführt.

## Revendications

1. Système de coussin d'air formant rideau latéral (20), comprenant:
un coussin d'air (22) ayant une longueur suffisante pour s'étendre d'un montant A (30) d'un véhicule devant être fixé en un point proche du montant C (34) d'un véhicule, le coussin d'air s'étendant dans l'état gonflé d'un point proche du rail du toit (38) du véhicule;
une source de gaz de gonflement (60) communiquant avec un tube (70) pour gonfler le coussin d'air (22);
le tube (70) étant agencé dans le coussin d'air (22) et comportant plusieurs ouvertures (72) le long de sa longueur pour distribuer le gaz de gonflement vers le coussin d'air (22);
**caractérisé en ce que**
le coussin d'air (22) comprend plusieurs panneaux assemblés (24a, 24b), le coussin d'air (22) ayant à l'état gonflé une hauteur suffisante pour s'étendre d'un point proche du rail du toit (38) du véhicule vers au moins le bord inférieur de la vitre latérale du véhicule; et
le tube (70) est flexible et comporte un tube élastomère interne avec une gaine externe renforcée composée de tissu tressé ou tissé.

2. Système de coussin d'air formant rideau latéral (20) selon la revendication 1, dans lequel les ouvertures (72) dans le tube flexible (70) sont réparties de manière non uniforme le long de la longueur du tube, de sorte que l'ensemble du volume du coussin d'air est gonflé de manière pratiquement simultanée.

3. Système de coussin d'air formant rideau latéral (20) selon l'une quelconque des revendications 1 ou 2, dans lequel une région arrière inférieure 22b du coussin d'air 22 est assemblée par collage ou couture, de sorte à ne pas être gonflée.

4. Système de coussin d'air formant rideau latéral (20) selon l'une quelconque des revendications précédentes, dans lequel une région avant inférieure 22b du coussin d'air 22 est assemblée par collage ou couture de sorte à ne pas être gonflée.

5. Système de coussin d'air formant rideau latéral (20) selon l'une quelconque des revendications précédentes, dans lequel différentes régions du coussin d'air (22d et 22e) sont assemblées par collage ou couture, de sorte à ne pas être gonflées, pour transférer ainsi le gaz de gonflement vers des régions gonflées spécifiques du coussin d'air.

6. Système de coussin d'air formant rideau latéral (20) selon l'une quelconque des revendications précédentes, dans lequel, en commençant au niveau d'un bord inférieur (22f) du coussin d'air, le coussin d'air est plié en une configuration en accordéon (90), de sorte à avoir pour l'essentiel une configuration tubulaire allongée et est enveloppé en un matériau cassable ou déchirable.

7. Système de coussin d'air formant rideau latéral (20) selon la revendication 6, dans lequel le coussin d'air plié enveloppé (22) est fixé sur le rail du toit (38).

8. Système de coussin d'air formant rideau latéral (20) selon l'une quelconque des revendications précédentes, dans lequel le tube (70) comporte une extrémité (74a) fixée autour d'un dispositif de gonflement (60) constituant la source de gaz de gonflement pour permettre l'écoulement direct du gaz de gonflement dans le tube, une extrémité opposée (74b) du tube étant fermée ou collée et fermée.

9. Système de coussin d'air formant rideau latéral (20) selon l'une quelconque des revendications 1 à 7, dans lequel le tube comporte deux extrémités fermées ou collées et fermées, la source du gaz de gonflement fournissant du gaz de gonflement au tube au niveau d'un emplacement agencé entre les deux extrémités fermées.
